# EUROPEAN PATENT APPLICATION

(11) **EP 4 772 836 A1**
(43) Date of publication of application: **08.07.2026**
(21) Application number: 25227566.4
(22) Date of filing: 30.12.2025
(51) Int. Cl.: G01C 21/36, G01C 21/00

(54) **IN-VEHICLE DEVICE AND METHOD FOR MARKING POINTS OF INTEREST**

(30) Priority: 03.01.2025 CN 202510012231
(71) Applicant: CARIAD (China) Co., Ltd., Beijing 100028 (CN)
(72) Inventor: WEN, Yue, Beijing, 100028 (CN); ZHAO, Xiaoyang, Beijing, 100028 (CN)
(74) Representative: v. Bezold & Partner Patentanwälte - PartG mbB

(57) **Abstract**

The present invention relates to a navigation system and a method for marking points of interest. The method includes monitoring voice commands within the vehicle cabin; performing speech recognition on the voice commands to determine their content; and marking points of interest on the navigation map based on attributes of the voice commands, the command content, and the vehicle state.

## Description

### Technical Field

The present invention relates to automotive navigation systems, and more particularly to marking points of interest (POls) on a navigation map.

### Background Technics

During vehicle driving, drivers often encounter places that catch their attention-such as distinctive restaurants, shops, scenic views, or unique traffic signs. These places may become destinations worth revisiting due to their uniqueness or personal interest. However, the primary responsibility of a driver is to maintain focus on the road and ensure driving safety, making it impractical to promptly record such points of interest (POI) while driving. Although a driver could attempt to locate the POI on the navigation map after stopping the vehicle, this approach is time-consuming and he frequently fails to retrace the exact points due to the trace complexity.

Existing solutions include voice-based POI marking in navigation map. Such approaches typically involve receiving a user's voice command along with the vehicle's position at that time, and then marking the vehicle's location on the navigation map as a POI. However, in practice, these methods often result in inaccurate POI placement.

### Summary of the Invention

The present invention proposes an improved voice-based POI marking scheme that enhances marking accuracy by taking into account both vehicle state and characteristics of voice command. The solutions of present invention not only ensure driving safety but also inproves driving experience and elevates the intelligence level of the vehicle system.

### Brief Description of the Drawings

Figure 1 exemplarily illustrates a block diagram of an In-vehicle device;
Figure 2 exemplarily illustrates a configuration diagram of an information processing module;
Figure 3 exemplarily illustrates a configuration diagram of a position matching unit;
Figure 4 illustrates a schematic diagram of a navigation system 400 according to an exemplary embodiment;
Figure 5 illustrates a flowchart of a POI marking method according to one embodiment;
Figure 6 illustrates a flowchart of a POI marking method according to another embodiment.

### Detailed Description of Embodiments

Prior to describing any embodiment of the present invention in detail, it should be understood that the scope of the invention is not limited to the specific structural details set forth herein or illustrated in the accompanying drawings. The invention may include other embodiments and may be practiced or implemented in various ways.

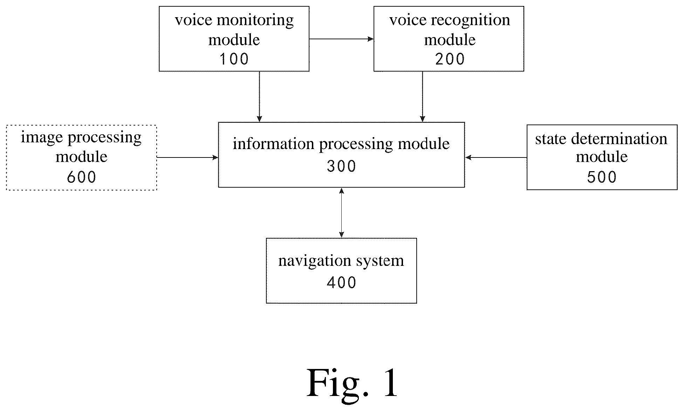

Figure 1 illustrates an exemplary In-vehicle device according to the present invention. As shown, the In-vehicle device includes a voice monitoring module 100, a voice recognition module 200, and an information processing module 300. The information processing module 300 is coupled to both the voice monitoring module 100 and the voice recognition module 200, and may further be coupled to a navigation system 400. In one embodiment, the navigation system 400 may be integrated into the In-vehicle device and activated by the user to perform real-time navigation along a pre-planned route (**Route**) on a navigation map. In alternative embodiments, the navigation system 400 may reside external to the In-vehicle device-for example, on a mobile terminal-and automatically couple with the In-vehicle device upon user's entry into the vehicle.

The voice monitoring module 100 is configured to monitor in-cabin speech or voice commands via an onboard microphone. In one embodiment, the voice monitoring module 100 may be a module of the vehicle's infotainment voice system and may be automatically activated during system initialization (e.g., upon vehicle startup), entering a standby mode ready to receive voice commands. In another embodiment, activation of voice monitoring module 100 may occur also only when the user initiates the navigation system 400. When voice monitoring module 100 detects a voice command, the voice monitoring module 100 captures the audio data VoiceCMD and forwards it to the voice recognition module 200. The voice recognition module 200, which may also be a module of the vehicle's infotainment system, performs speech recognition on the received VoiceCMD from voice monitoring module 100, by using techniques such as Natural Language Processing (NLP) to identify keywords and semantics contained in the VoiceCMD in real time. For example, if the input voice command is "Mark this restaurant for me," the voice recognition module 200 identifies the semantic intent (Semantic) as **"record"** or **"mark,"** and extracts the keyword (KeyWord) **"restaurant".** Based on the recognized Semantic = **"mark,"** the module determines that the voice command is intended to mark a restaurant. Therefore, the voice recognition module 200 can provide the recognition result, Semantic = **"mark"** and KeyWord = **"restaurant",** to the information processing module 300.

Upon receiving the recognition result from voice recognition module 200, the information processing module 300 also obtains the voice command VoiceCMD-either by requesting it from the voice monitoring module 100, or in another embodiment, the voice recognition module 200 may also transmit the original voice command VoiceCMD together with the recognition result to the information processing module 300. In accordance with one exemplary embodiment of the present invention, when the voice monitoring module 100 detects the voice command VoiceCMD, it simultaneously records the start time t at which the voice command is detected and the total duration **T** of the voice command, then all these time information are then appended to the voice command VoiceCMD as timestamps, thereby constituting part of the attributes of VoiceCMD.

Upon receiving the voice command VoiceCMD, the information processing module 300 caches and parses the command to extract the associated command attributes, such as the command start time **t** and the voice duration **T.** After these attributes are extracted, the original voice command VoiceCMD may be deleted to conserve storage space. In accordance with one exemplary embodiment of the present invention, neither voice monitoring module 100 nor voice recognition module 200 transmits VoiceCMD to information processing module 300, rather, after the information processing module 300 receives the recognition result from the voice recognition module 200, it sends a request to the voice monitoring module 100 for the associated command attributes. In response to this request, the voice monitoring module 100 transmits the attribute information, including start time **t** and duration **T,** back to the information processing module 300.

In accordance with the present invention, full consideration is given to such a vehicle's characteristic that the vehicle is in motion while the user issues the voice command. The information processing module 300 determines a point of interest (POI) that may be likely interesting to the user, based on the command attributes of the voice instruction, the command content (i.e., the recognition result), and the vehicle state, thereby enabling accurate marking of the POI on the navigation map rendered by the navigation system 400. In this context, the vehicle state may include the vehicle speed **V** (e.g. as shown in Figure 1). The information processing module 300 may obtain the vehicle speed **V** from a state determination module 500. In various exemplary embodiments, the state determination module 500 may be implemented as a speed sensor that measures the vehicle's speed in real time, or alternatively as the vehicle's electronic control unit (ECU) that stores vehicle-state parameters.

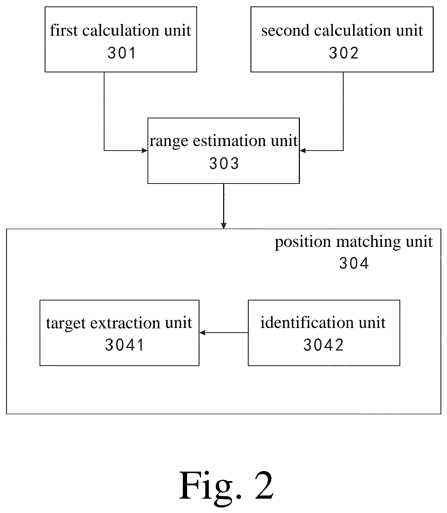

Figure 2 illustrates an exemplary configuration of the information processing module 300. As shown by Figure 2, processing module 300 includes a first calculation unit 301, a second calculation unit 302, a range estimation unit 303, and a position matching unit 304. The first calculation unit 301 retrieves the voice command's start time **t** and queries the navigation map's route **Route** to determine the vehicle's geographic location at the time **t,** denoted as P0. In one exemplary embodiment of the present invention, the navigation system 400 may pre-store map data corresponding to a predetermined time window in the past, therefore, the first calculation unit 301 can directly retrieve the vehicle's position P₀ at time **t** from this prestored map data based on the timestamp **t.**

The second calculation unit 302 receives vehicle state parameters from the state determination module 500-in this example, the current vehicle speed V, and, determines, in combination with the voice command duration **T,** the position change range d of the vehicle over the time duration **T,** i.e., the distance traveled. Assuming a constant vehicle speed **V,** the distance **d** is calculated as **d = V × T.** In real-world driving scenarios, since the vehicle is typically in fast moving state, when the user issues a voice command such as "Help me mark this restaurant", the restaurant of interest may be located ahead of the vehicle at a position P1 that has not yet been reached, or it may be a location the user suddenly notices while the vehicle is rapidly passing by, that is, the restaurant could already lie behind the vehicle's current position P0 at the moment the voice command is issued. In view of these possibilities, according to one exemplary embodiment of the present invention, the second calculation unit sets the geographic range P1~P2 for the points of interest based on the position change range **d,** where **P1 = P0 - d** and **P2 = P0 + d.** This means that the restaurant of potential interest to the user may lie within a distance **d** both ahead of and behind the vehicle's current position P0 at the time the voice command is issued. The position matching unit 304 then performs matching processing within the geographic range from P1 to P2 based on the received keyword KeyWord to identify a restaurant, i.e., POI that may be interesting to the user. For example, the position matching unit 304 may search out a restaurant or hotel that matches the keyword **"restaurant"** within the geographic range of P1~P2 along the navigation route **Route,** and identify it as a possible POI. The position matching unit 304 then transmits the identified POI to the navigation system 400 which invokes its map-marking function to annotate the POI on the navigation map.

According to one exemplary embodiment of the present invention, as shown in Figure 2, the position matching unit 304 includes a target extraction unit 3041 and an identification unit 3042. The target extraction unit 3041 retrieves all landmark names from the navigation map located within the geographic range P1~P2 along the navigation route **Route.** These landmarks may correspond to various types of venues, such as "ABC Bank," "CDE Mall," or "DCF Restaurant." Then, based on the landmark's name characteristics or in an other available way, the target extraction unit 3041 then determines the category or classification of each landmark-e.g., whether it is a bank, shopping mall, restaurant, or other type of establishment. Subsequently, the identification unit 3042 performs matching processing between the keyword **"restaurant"** and the classifications assigned to the extracted landmarks by the target extraction unit 3041. It identifies those landmarks whose categories match the keyword **"restaurant"**-for example, "DCF Restaurant"-and marks it as a POI accordingly. As seen, the present invention fully accounts for factors such as vehicle motion and the changing field of view of the human eye; therefore, the marked POI closely matches the user's actual interest as possible as it can.

The extracted landmarks within the geographic range P1~P2 of the navigation route **Route** may be more than one, and even the landmarks categorized as restaurant or hotel may be several. Meanwhile, these landmarks categorized as restaurant or hotel may be located either on one side of the current travelling road, or on both sides. Therefore, in order to more accurately identify the restaurant in which the user is genuinely interested, in another exemplary embodiment of the present invention, those landmarks within the geographic range P1~P2 are filtered by determining a possible location orientation of the user's point of interest. To this end, as shown in Figure 1, the In-vehicle device further includes an image processing module 600 configured to acquire video or one or more images of the user inside the vehicle captured by an in-vehicle camera during the period when the user issues a voice command. Specifically, the image processing module 600 acquires video or image frames FRM over the time duration from the moment **t** to **t+T.** Furthermore, the image processing module 600 processes the acquired image FRM or the image frames FRM from the video to determine the user's gaze direction GAZ during the voice command duration **T.** For example, it may identify whether the user was looking toward the left-side or right-side scene at that moment. Here the image processing module 600 may employ known image processing techniques to perform this gaze direction recognition. Accordingly, the image processing module 600 provides the gaze direction GAZ to the information processing module 300.

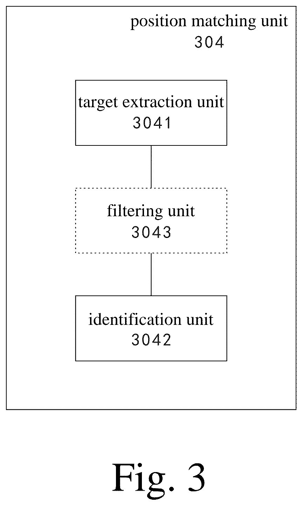

As shown in Figure 3, which illustrates a schematic diagram of the position matching unit 304 according to another exemplary embodiment of the present invention, the position matching unit 304 includes, in addition to the target extraction unit 3041 and the identification unit 3042, a filtering unit 3043. In accordance with this embodiment of the present invention, the target extraction unit 3041 not only extracts all possible landmark names within the geographic range P1~P2 along the route Route-as described with reference to Figure 2, i.e. the landmarks denoted as {Point₁, Point₂, ···, Pointₙ}, where each Point represents an individual landmark and N is the number of identified landmarks, but also the extraction unit 3041 further mark an orientation attribute {ORI₁, ORI₂, ···, ORIₙ} for each landmark {Point₁, Point₂, ···, Pointₙ} with respect to the current travelling route **Route.** Here, the ORI denotes directional information such as "left," "right," or "ahead," thereby indicating whether the corresponding landmark Point is located on the left side, right side, or ahead of the current route **Route.** The filtering unit 3043 receives the gaze direction result GAZ transmitted from the image processing module 600, and simultaneously receives from the target extraction unit 3041 the set of extracted landmark names {Point₁, Point₂, ···, Pointₙ} together with their corresponding orientation attribute {ORI₁, ORI₂, ···, ORIₙ}. Based on the received gaze direction GAZ, the filtering unit 3043 performs filtering on the landmark set {Point₁, Point₂, ···, Pointₙ}. For instance, if the user's gaze direction GAZ = "left," it indicates that the user was observing landmarks on the left side. Consequently, the filtering unit 3043 retains only those landmarks whose orientation attribute ORI indicates "left." For example, when the subset {Point₁, Point₂, ···, Pointₘ} represents landmarks located on the left side of the route and the subset {Pointₘ₊₁, Pointₘ₊₂, ···, Pointₙ} represents those on the right side, then according to an exemplary embodiment of the present invention, if the user's gaze direction GAZ = "left," the filtering unit 3043 discards the landmark subset {Pointₘ₊₁, Pointₘ₊₂, ···, Pointₙ} and forwards only the data in the subset {Point₁, Point₂, ···, Pointₘ} to the identification unit 3042. The identification unit 3042 then determines the user's intended point of interest (POI) by performing category identification and matching processing on the filtered subset {Point₁, Point₂, ···, Pointₘ}, in the manner previously described with reference to Figure 2. For example, the Restaurant AA located on the left side of the route would be recognized as the user's point of interest (POI), rather than also marking Restaurant BB situated on the right side of the route as a POI, as in the aforementioned example, even though Restaurant BB is not the user's actual point of interest. Therefore the identification module 3042 then provides the identified landmark Restaurant AA to the navigation system 400 for mark on the navigation map. Thus, according to the present invention, by capturing the user's additional behavioral characteristics at the moment of issuing the voice command, the accuracy of POI mark is further improved.

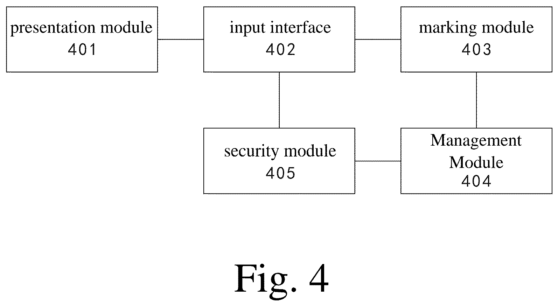

According to the aforementioned embodiments of the present invention, although the filtering processing enables points of interest (POls) to be marked on the navigation map of a navigation system with higher accuracy, there may still be scenarios where multiple POIs are simultaneously marked. For example, as illustrated in the above example, multiple restaurants or hotels may exist concurrently on the left side of the road within the given geographical range. To address this issue, a further exemplary embodiment of the present invention allows users to select among multiple candidate POIs directly on the navigation system. To this end, Figure 4 illustrates a schematic diagram of a navigation system 400 according to this exemplary embodiment. The navigation system 400 includes a presentation module 401, an input interface 402, and a marking module 403. As previously described, once the recognition unit 3042 identifies multiple candidate landmarks-e.g., {Point₁, Point₂, Point₃}-that match the user's voice command as potential POIs, these candidate landmarks {Point₁, Point₂, Point₃} are provided to the navigation system 400. The presentation module 401 then presents these three candidate landmarks Point₁, Point₂, Point₃ in real time as prompt information. The presentation module 401 may be implemented as the navigation system's display screen, wherein the names of the landmarks Point₁, Point₂, Point₃ are visually rendered on the screen in the form of text or icons. Typically, when the display screen is a touchscreen, the input interface 402 is provided via the touchscreen, enabling the user to manually select their desired POIs via the input interface 402. Consequently, the marking module 403 marks the landmark selected by the user via the input interface 402 as the target POI on the navigation map.

In another exemplary embodiment of the present invention, the presentation module 401 may also be implemented as a speaker to audibly announce the candidate landmarks-Point₁, Point₂, Point₃, and send a request for prompting the user to select their desired points of interest (POI). Concurrently, the navigation system can capture the user's voice via, for example, the voice monitoring module 100 and the voice recognition module 200. Thus, the marking module 403 can mark the user's selection of POI identified by the recognition module 200 onto the navigation map.

Accordingly, by leveraging the POI marked on the navigation map, the user can conveniently initiate navigation directly to the desired point of interest POI simply by tapping the marked POI on the navigation map upon completion of his current trip, thereby enhancing the overall user experience with the navigation system.

According to another exemplary embodiment of the present invention, the navigation system 400 further includes a management module 404 and a security module 405 to manage the POIs marked on the navigation map. After having determined a point of interest (POI) for the user, for example, Restaurant AA on the left side of the driving route **Route,** the information processing module 300 can create a classification label **Label** for Restaurant AA, such as 'Restaurant', while recording the time TT when this point of interest Restaurant AA was marked on the navigation map by the mark module 403. Thus, the point of interest Restaurant AA together with its attribute features can be stored in the navigation system 400, where the attribute features may include the POI marking time TT, its classification label **Label,** and location information such as GPS coordinates. In this way, the user can conveniently and accurately record points of interest during navigation. The user can then manage these points of interest at their convenience by reviewing the records in the navigation system-for example, deciding whether to delete or retain a stored point of interest after further investigation, or sharing the point of interest with friends if still interested. According to an example of the present invention, the navigation system 400 further includes an output interface (not shown in the figure), which may be, for example, a WeChat-invoking interface or a wireless communication interface such as SMS (Short Message Service). This allows the user to send the point of interest, for example Restaurant AA, along with its location information, to friends via this output interface, thereby further enhancing the user experience of the navigation system.

It should be noted that, according to the present invention, the navigation system 400 may be either an in-vehicle navigation system or in a mobile terminal such as a smartphone that communicates wirelessly with the vehicle. The mobile terminal can connect to the vehicle's host through V2X protocols, Bluetooth, Wi-Fi, or similar technologies, enabling communication with in-vehicle devices-for example, with the voice monitoring module, voice recognition module, information processing module, and other components as described in the present invention.

When the navigation system 400 is implemented as an in-vehicle navigation system, it must be considered that the vehicle's navigation system may be used by different individuals. Therefore, to protect user privacy, an embodiment of the present invention provides a security module 405 in the navigation system 400. The security module 405 can be configured to prompt the user whether to set a security access code when the management module 404 creates or assigns a classification label to a point of interest (POI). This security access code may be an arbitrary numeric string, character string, or a combination of both. The current user of the vehicle may assign the same security access code to all POIs they mark while using the navigation system. The security access code can be stored together with the POIs in the navigation system 400 as attribute information associated with the point of interest (POI). Consequently, when a vehicle user wishes to access POIs stored in the navigation system, the system prompts the user to enter the security access code to verify their identity and only users who input the correct access code are authorized to access the associated POls.

In this manner, different users can use distinct access codes to ensure the privacy of their own data. It should be noted that the embodiments of the present invention are not limited to those discussed above. For example, when managing POIs via the management module 404, a user may independently decide, by means of options provided by the security module 405, whether to enable a security verification mechanism for a given POI. Furthermore, such a security verification mechanism is not limited to the aforementioned security access code.

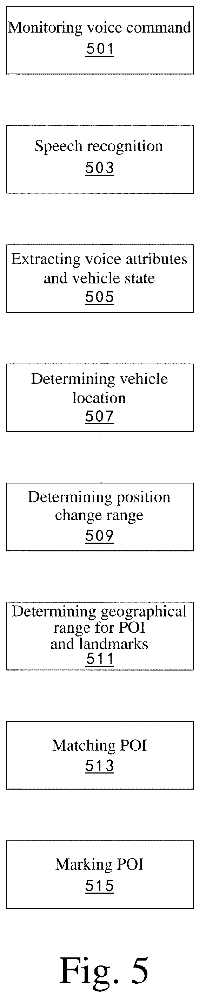

Figure 5 illustrates a flowchart of a POI marking method according to an exemplary embodiment of the present invention. At step 501, during a user's navigation along a pre-planned route **Route,** an in-cabin microphone listens for conversations or voice commands. Upon detecting voice input, the voice command data VoiceCMD along with its associated attribute features is recorded. At step 503, a speech recognition processing is performed on VoiceCMD, e.g., by using natural language processing (NLP), to identify and parse keywords and semantic contained in the voice data VoiceCMD in real time. For example, if VoiceCMD is "Help me mark this restaurant," Semantic = **"mark"** and KeyWord = **"restaurant"** will be recognized.

Subsequently, a POI is marked on the navigation map based on the command attributes, the recognized content, and vehicle state. As an example, as shown in Figure 5, at step 505, the voice command VoiceCMD is parsed to extract its appended command attribute information, such as the time **t** when the voice command was issued and the voice duration **T.** Furthermore, the current vehicle speed information **V** is obtained from the vehicle speed sensor or the ECU.

At step 507, the issuance time **t** of the voice command VoiceCMD is obtained, and the vehicle's position at the time **t** is extracted by querying the route **Route** in the navigation map, denoted hereinafter as P0. At step 509, the position change range d of the vehicle over the entire duration **T** is determined based on the vehicle's current speed **V** and the voice command duration **T,** where **d = V × T.** At step 511, a geographical range P1~P2 for the point of interest is established based on the vehicle positional change range d, where **P1 = P0 - d** and **P2 = P0 + d**. This means that the restaurant interesting to the user lies within a distance range of **d** before and after the vehicle's position P0 at the moment the voice command was issued. Further, at step 511, all landmark names located within the geographical range P1~P2 are identified from the navigation map.

At step 513, a matching process is performed based on the received keyword KeyWord within the geographical range from position P1 to position P2 to determine a restaurant that may be of interest to the user, i.e., a point of interest POI. For example, based on the navigation route **Route,** restaurants or hotels matching the keyword **"restaurant"** within the geographical range from position P1 to position P2 are identified as potential points of interest POI. Subsequently, at step 515, the location matching unit 304 can sends the identified points of interest POI to the navigation system 400; thereby the navigation system 400 invokes a map marking function to mark the points of interest POI on the navigation map.

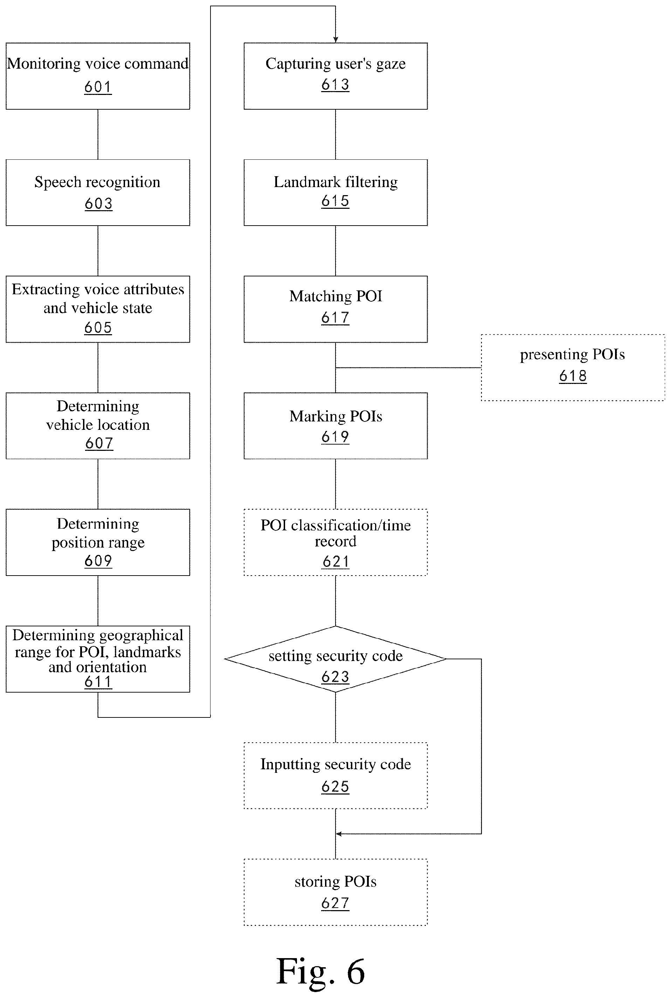

Since there is more than one landmark within the geographical range P1~P2 extracted from the navigation route **Route**, and even there may be more than one landmarks belonging to the category of restaurants or hotels, other embodiments of the present invention allow for selection among the landmarks. Figure 6 illustrates a flowchart of a point-of-interest marking method according to such an embodiment, in which steps 601~611 perform the same operations as steps 501~511, with the exception of step 611 at which not only all candidate landmark names {Point₁,Point₂,···Point_{N}} within the geographical range P1~P2 along the route **Route** are determined, but also their orientation features {ORI₁, ORI₂···ORI_{N}} relative to the current travel route **Route** are also identified, where ORI represents whether the corresponding landmark Point is to the left, right, or ahead of the current route.

In step 613, video or one or more images of users within the vehicle are captured by use of the vehicle camera during the period when the user issues a voice command, i.e., video or images FRM within the time duration from **t** to **t+T** are captured. Further, the captured images FRM are processed to determine the user's gaze direction GAZ during the voice duration, for example, identifying whether the user is currently looking toward the left-side scene or the right-side scene.

In step 615, the landmark names {Point₁, Point₂, ···, Point_{N}} are filtered based on the user's gaze direction GAZ and the orientation features ORI of the candidate points of interest. For example, when the user's gaze direction GAZ = 'left', it indicates that the landmarks observed by the user are located on their left side; thus, only those landmarks whose orientation feature ORIs denotes 'left', for instance, {Point₁, Point₂, ···, Point_{M}}, are selected from the set {Point₁, Point₂, ···, Point_{N}}. Consequently, only the data corresponding to the landmark set {Point₁, Point₂, ···, Point_{M}} is submitted for subsequent matching processing. At step 617, after classification and matching of the landmarks in {Point1, Point2, ···, PointM}, the keyword Keyword is used to identify the user's desired point of interest (POI). For example, the Restaurant AA located on the left side of the road can be identified as the user's POI, rather than labeling simultaneously all restaurants potentially located on both sides of the road as POls. Subsequently, at step 619, the identified landmark-i.e., the Restaurant AA-is provided to navigation system 400 for marking on the navigation map.

Although the filtering process enables marking of points of interest (POls) on the navigation map of the navigation system with higher accuracy, scenarios may still arise where multiple POls-for example, {Point₁, Point₂, Point₃}-are simultaneously marked. To address this, in another embodiment of the present invention, step 618 may be further included, wherein the candidate landmarks {Point₁, Point₂, Point₃} are provided to navigation system 400 for display on its screen, allowing the user to manually select their desired POls. Alternatively, in another example, the landmark names {Point₁, Point₂, Point₃} may be presented to the user via audio output, and then the user's desired POI is determined based on the user's voice input.

In a further embodiment, the marked POIs are subjected to security management. To this end, as shown in Figure 6, step 621 may be further included, wherein after the user's point of interest (POI) has been identified, for example, the Restaurant AA located on the left side of the driving route **Route,** a classification label Label, such as **"restaurant,"** can be created for the Restaurant AA while the time TT, at which the POI Restaurant AA is marked on the navigation map, is recorded.

In step 623, when a classification label is created or assigned for the point of interest (POI), the user is prompted whether to set a security access code. If the user chooses to set an access code, the user-input access code will be received in step 625.

In step 627, the attribute features of the POIs are stored in navigation system 400 in association with the POIs, wherein the attribute features may include the POI marking time TT, classification label Label, location information (e.g., GPS coordinates), and the security access code. This enables both management of the POIs by the user and assurance of privacy. If, at step 623, the user opts not to set a security access code, the process proceeds directly to step 627, where the attribute features of the POIs are stored in navigation system 400 in association with the POIs. In this case, the attribute features include only the POI marking time TT, classification label Label, and location information (e.g., GPS coordinates).

Although the exemplary methods and In-vehicle devices of the present invention have been described above with reference to specific examples, it should be understood that the described method steps, modules, or units may be implemented as electronic hardware, computer software, modules, or any combination thereof. Furthermore, in another embodiment of the present invention, there is provided a machine-readable medium with machine-readable instructions stored thereon. The machine-readable instructions, when executed by a processor, cause the processor to perform any of the methods disclosed herein. The processor may be a part of either the vehicle infotainment system or the navigation system.

Moreover, the present invention has been illustrated and described in detail above with reference to the accompanying drawings and preferred embodiments. However, the invention is not limited to the disclosed embodiments. Based on the multiple embodiments described above, those technicians skilled in the art will recognize that additional embodiments of the invention can be obtained by combining features from different embodiments, and such combinations also fall within the scope of protection of the present invention.

## Claims

1. A method for marking a point of interest (POI), comprising:
monitoring a voice command inside a vehicle cabin;
performing speech recognition processing on the voice command to determine command content; and
marking a POI on a navigation map based on command attributes of the voice command, the command content, and vehicle state.

2. The method of claim 1, wherein performing speech recognition processing on the voice command comprises:
performing natural language processing (NLP) on the voice command, wherein the determined command content comprising a keyword and a semantic, wherein the keyword relates to geographic or location information and the semantic relates to a user-desired operation.

3. The method of claim 2, wherein the command attributes comprise a command issuance time and a duration of the monitored voice command, and
wherein marking the POI on the navigation map further comprises:
determining a vehicle position at the time when the voice command was monitored, based on the command issuance time and navigation map data (obtained via GPS);
determining a position change range of the vehicle based on the duration of the voice command and the vehicle state;
determining a geographic range for the POI based on the vehicle position and the position change range;
performing matching processing between the keyword and the geographic range to identify the POI.

4. The method of claim 3, wherein performing the matching processing between the keyword and the geographic range comprises:
identifying classifications of a plurality of candidate points within the geographic range; and
recognizing, as the POI, one or more candidate points whose classification match the keyword.

5. The method of claim 4, further comprising:
capturing, via a vehicle camera, a user's gaze direction during the duration of the voice command;
filtering the geographic range by using the gaze direction; and
performing the matching processing between the keyword and the filtered geographic range to determine the POIs.

6. The method of claim 5, wherein capturing the gaze direction comprises determining the user's head orientation or eye gaze direction.

7. The method of any of claims 2 to 6, wherein the user-desired operation comprises an operation related to marking on the navigation map.

8. The method of claim 7, further comprising:
displaying, on a human-machine interface, one or more landmarks within the geographic range identified by the matching processing;
receiving a user selection among the one or more landmarks; and
marking the selected landmark as the POI on the navigation map.

9. The method of claim 7, further comprising:
storing attributes of the POIs in a navigation system, including a marking timestamp and a classification label of the POI, to enable searching of the stored POIs based on the marking timestamp and the classification label.

10. The method of claim 9, further comprising:
performing user authentication to authorize access to the stored POIs when searching for a POI.

11. The method of claim 10, further comprising:
providing a data transmission interface to allow the user to share the POIs over a network, including geographic location information of the POIs.

12. An In-vehicle device, comprising:
a voice monitoring module configured to monitor a voice command inside a vehicle cabin;
a voice recognition module configured to perform speech recognition processing on the voice command to determine command content in response to the voice command monitored;
an information processing module configured to determine a POI to be marked on a navigation map based on command attributes of the voice command, the command content, and vehicle state parameters.

13. The In-vehicle device of claim 12, wherein the voice recognition module is further configured to perform natural language processing (NLP) on the voice command, where the determined command content comprising a keyword and a semantic, wherein the keyword relates to geographic or location information and the semantic relates to a user-desired operation.

14. The In-vehicle device of claim 13, wherein the voice monitoring module is configured to determine a command issuance time and a duration of the voice command by monitoring the voice command inside the vehicle cabin; and
wherein the information processing module further comprises:
a first calculation unit configured to determine a vehicle position at the time when the voice command has been monitored, based on the command issuance time and navigation map data;
a second calculation unit configured to determine a position change range of the vehicle based on the duration of the voice command and vehicle state;
a range estimation unit configured to determine a geographic range for the POI based on the vehicle position and the position change range;
a position matching unit configured to perform matching processing between the keyword and the geographic range to identify the POI.

15. The in-vehicle device of claim 14, wherein the position matching unit further comprises:
a target extraction unit configured to determine classification of a plurality of candidate points within the geographic range;
an identification unit configured to recognize, as the POI, one or more candidate points whose classifications match the keyword.

16. The in-vehicle device of claim 15, further comprising:
an image processing module configured to capture, via an in-vehicle camera, a user's gaze direction during the duration of the voice command;
wherein the position matching unit further comprises:
a filtering unit configured to filter the geographic range based on the gaze direction; and
wherein the identification unit performs the matching processing between the keyword and the filtered geographic range to determine the POI.

17. The in-vehicle device of claim 16, further comprising a navigation system comprising:
a presentation module configured to display one or more landmarks within the geographic range identified by the matching processing;
an input interface configured to receive a user selection among the one or more landmarks; and
a marking module configured to mark the selected landmarks as the POI on the navigation map.

18. The in-vehicle device of claim 17, wherein the navigation system further comprises a management module configured to:
create a classification labels for the POIs and record a marking timestamp of the POls;
store attributes of the POIs in the navigation system including the marking timestamp and the classification label to enable searching the stored POIs based on the marking timestamp and the classification label.

19. The in-vehicle device of claim 18, wherein the navigation system further comprises a security module configured to authenticate user identity to authorize access to the POls.

20. A navigation system comprising a machine-executable program, wherein the program, when executable by at least one central processing unit, implements the method for marking POI of any of claims 1 to 11.
